# EUROPÄISCHE PATENTSCHRIFT

(11) **EP 1 203 505 B1**
(45) Veröffentlichungstag und Bekanntmachung des Hinweises auf die Patenterteilung: **31.10.2007**
(21) Anmeldenummer: 00958149.7
(22) Anmeldetag: 18.07.2000
(51) Int. Cl.: H04Q 7/38, H04M 15/00, H04Q 3/00

(54) **VERFAHREN ZUR ÜBERWACHUNG DER POSITION EINES MOBILEN KOMMUNIKATIONSENDGERÄTES BEI ORTSABHÄNGIGEN TELEKOMMUNIKATIONS-DIENSTEN UND AKTIVER SPRACHVERBINDUNG**
METHOD FOR MONITORING THE POSITION OF A MOBILE COMMUNICATION TERMINAL IN LOCATION-DEPENDENT TELECOMMUNICATION SERVICES AND ACTIVE VOICE LINK
PROCEDE DE CONTROLE DE LA POSITION D'UN TERMINAL DE COMMUNICATION MOBILE POUR DES SERVICES DE TELECOMMUNICATION DEPENDANT DE LA POSITION ET UNE COMMUNICATION VOCALE ACTIVE

(30) Priorität: 12.08.1999 DE 19938081
(43) Veröffentlichungstag der Anmeldung: 08.05.2002
(73) Patentinhaber: NOKIA SIEMENS NETWORKS GMBH & CO. KG, 81541 München (DE)
(72) Erfinder: ASCHIR, Alexander, D-13581 Berlin (DE); BERG, Andreas, D-10585 Berlin (DE)
(86) Internationale Anmeldenummer: PCT/DE2000/002331
(87) Internationale Veröffentlichungsnummer: WO 2001/013662

(56) Entgegenhaltungen:
- WO-A-97/48245
- WO-A-98/58505
- WO-A-99/07167
- WO-A-99/34590
- WO-A-99/56326
- US-A- 5 754 955

## Beschreibung

### Fachgebiet der Erfindung

Ortsabhängige Telekommunikations-Dienste (*Location Dependent Services*) gewinnen in Mobilfunknetzen mehr und mehr an Bedeutung.
Eine bekannte Technik zur Realisierung solcher und anderer Telekommunikations-Dienste in Telekommunikationsnetzen, insbesondere im Mobilfunknetz, ist das "Intelligente Netz" IN, welches durch ITU Publikationen (Q.1200 ff) und ETSI Normen dem Fachmann bekannt ist.

Für Anrufe, die von einem Mobilen Endgerät ausgehen (Mobile Originating Call, MOC) wird derzeit nur der Aufenthaltsort des Mobilen Endgerätes (Mobile Station, MS) bewertet, der beim Aufbau der Verbindung vorliegt.
Der Aufenthaltsort des Endgerätes kann dabei bislang wie folgt festgestellt werden. Die Nachricht IDP (INAP Operation Initial DP) an die Dienstezentrale enthält eine Ortsinformation (*LocationInformation*), die die Nummer (*LocationNumber*) der Funk-Zelle (*serving cell*) des Mobilfunknetzes enthält, über die das Gespräch ursprünglich aufgebaut wird. Bewegt sich der Dienst-Kunde in eine andere Zelle (Handover), so erhält die Dienstezentrale (beispielsweise der SCP, Service Control Point) keinerlei Hinweis über die Änderung des Aufenthaltsortes.

Für einen Dienst und beispielsweise dessen spezielle vergebührung (Home Zone Billing, HZB), abhängig vom Aufenthaltsort, bedeutet dies: beginnt der Dienst-Kunde innerhalb einer vergünstigten Funk-Zelle (Home Zone) ein Telefonat, wird das Gespräch günstiger vergebührt. Daran ändert sich jedoch auch nichts wenn er diese Funkzelle (Home Zone) verlässt. Wünschenswert für den Dienst-Anbieter ist es, dass der Dienst-Kunde ausschließlich innerhalb seiner eigenen Funkzelle (n) (Home Zone) billiger telefoniert, außerhalb dieser Funkzelle(n) aber zu den üblichen Mobilfunktarifen.

Gleiches gilt für die umgekehrte Richtung: Beginnt der Dienst-Kunde das Telefonat außerhalb seiner Home Zone und betritt sie während des Gesprächs, dann telefoniert er auch dort zum höheren Tarif.

Dieselbe Problematik tritt auch auf, wenn der Kunde des ortsabhängigen Dienstes, der beispielsweise dieses Gebührenmodell nutzt, angerufen wird (Mobile Termininating Call, MTC).

Dies betrifft alle positionsabhängigen Eigenschaften eines Telekommunikationsdienstes, beispielsweise auch Zugriffsberechtigungen auf bestimmte Dienste, Einschränkungen von Diensteigenschaften in bestimmten Funkzellen usw.

### Stand der Technik

Zur Ortsbestimmung sind bereits Techniken bekannt.
Mittels Laufzeitmessungen kann der Aufenthaltsort des Mobilen Endgerätes auf etwa 100 Meter genau festgestellt werden. (*Time Of Arrival* TOA, *Enhanced Observed Time Difference* E-OTD). Auch die Verwendung eines funkgestützten globalen Positionierungssystems (GPS, Global Positioning System) ist bekannt.

Beide Lösungen sind aufwendig und kostenintensiv. Zudem liefern sie viel genauere Positionsangaben, als es für die beschriebenen Telekommunikations-Dienste erforderlich ist.

Die WO 97/48245 offenbart ein Vergebührungsmodell für ein zellular aufgebautes intelligentes Netz, welches Service Control Points (SCP) und Sevice Switching Points (SSP) aufweist. Die Vergebührung hängt dabei von dem jeweiligen Aufenthaltsort der Funkteilnehmer ab. Bei einem Wechsel des Aufenthalts von einem oder von beiden Funkteilnehmern in eine andere Funkzelle ermittelt das intelligente Netz entsprechende Ortsinformationen in Form von zell-Informationen durch ein Mobile Switching Center (MSC) oder durch einen Base Station Controller (BSC). Damit erfolgt die Vergebührung eines Anrufs auf der Grundlage einer wiederholten Aktualisierung der Positionsdaten.

Die WO 98/58505 offenbart ein Vergebührungsmodell für ein Mobilfunksystem, bei dem mobile Endgeräte (MS, MT) verwendet werden, welche jeweils eine Lokalisierungseinrichtung ("locator object") aufweisen. Die Lokalisierungseinrichtung bestimmt in bestimmten Intervallen die Funkzelle, in der sich das Endgerät gerade befindet. In dem Endgerät ist ferner eine Liste mit vergünstigten Gebieten bzw. Funkzellen gespeichert. Die Lokalisierungseinrichtung überwacht Anrufe, die von dem Endgerät aus getätigt werden. Wenn von dem Endgerät ein Anruf aufgebaut wird, überprüft die Lokalisierungseinrichtung ob sich das Endgerät bei der letzten Lokalisierung in einem vergünstigten Gebiet befunden hat. Wenn das der Fall ist, dann ist der Anruf vergünstigt.

Aufgabe der Erfindung ist es, ein Verfahren anzugeben, welches auf einfache Weise eine genaue Ortsbestimmung eines mobilen Endgerätes während einer Kommunikationsverbindung ermöglicht.

### Darstellung der Erfindung

Diese Aufgabe wird gelöst durch ein Verfahren gemäß Patentanspruch 1.

Dabei wird im folgenden eine Erweiterung für Telekommunikations-Dienste (MOC und MTC) beschrieben.

Der Telekommunikations-Dienst, welcher A-seitig (also vom Anrufenden, MOC) oder B-seitig (also vom Angerufenen, MTC) aus aktiviert werden kann, hat als Merkmal eine Ortsabhängigkeit. Das bedeutet, dass er unterschiedlichen Vergebührungsmodellen unterliegt. Auch andere Dienstemerkmale (Features) können sich ortsabhängig unterscheiden.

Um eine korrekte Funktionsweise des Telekommunikations-Dienstes während einer Verbindung zu garantieren, muß die Position des betroffenen Endgerätes nicht nur bei verbindungsaufbau sondern während der gesamten Zeitdauer der aktiven Verbindung überprüft werden. Bei Feststellung einer Positionsveränderung muß dann die entsprechende. Änderung des Telekommunikations-Dienstes durch die Dienstezentrale durchgeführt werden, also beispielsweise eine Änderung des verwendeten Gebührenmodells.

Werden dem Telekommunikations-Dienst die Positionswechsel bekannt, dann kann die Dienstezentrale (beispielsweise der SCP eines IN) während des Gespräches auf die Veränderung reagieren - eine bisher nicht verfügbare Dienste-Eigensahaft.

Der Vorteil gegenüber "Time Of Arrival" (TOA) und "Enhanced Observed Time Difference" (E-OTD) ist, dass die im Netz verfügbare Technik genutzt wird. Die hier vorgestellte Lösung ist einfacher umzusetzen, wenn auch nicht so genau.

Erfindungsgemäß wird ein spezielles Gebührenmodell verwendet, bei dem die angefallenen Gebühren abhängig davon sind, um welchen Teilnehmer es sich handelt und auf welcher Position er sich gerade befindet.

Die Positionsänderung wird dabei über das Endgerät initiiert. Das Endgerät meldet seine Position an die Dienstezentrale. Dies kann geschehen, wann immer das Endgerät eine (signifikante) Positionsänderung feststellt, oder auch in regelmäßigen Abständen sowie eine Kombination aus beiden.

Vorteilhafte Ausgestaltungen und Weiterbildungen sind in den Unteransprüchen angegeben.

In einer Ausgestaltungsform wird die Position des Endgerätes von der Dienstezentrale abgefragt. Dies kann in regelmäßigen Abständen erfolgen.

Die Positionsinformation, welche von dem Kommunikationsendgerät an die Dienstezentrale übermittelt wird, kann dabei in einem beliebigen Format sein. Wenn sie nicht in dem von der Dienstezentrale verwendeten Format ist, muss diese sie nach Empfang in geeignete Positionsinformation umgesetzt werden.

Die Häufigkeit und die Abstände der Übermittlung von Positionsinformationen kann vom einschlägigen Fachmann geeignet gewählt werden.

### Kurzbeschreibung der Zeichnungen

Im folgenden wird die Erfindung anhand von Ausführungsbeispielen erläutert. Dabei zeigen
- Figur 1: eine schematische Darstellung eines zellular aufgebauten Mobilfunknetzes und ein Endgerät, welches während einer Verbindung seine Position innerhalb des Mobilfunknetzes verändert,
- Figur 2: eine vom SCP initiierte Lösungsvariante und
- Figur 3: eine vom Endgerät initiierte Lösungsvariante.

### Beschreibung der bevorzugten Ausgestaltungsformen

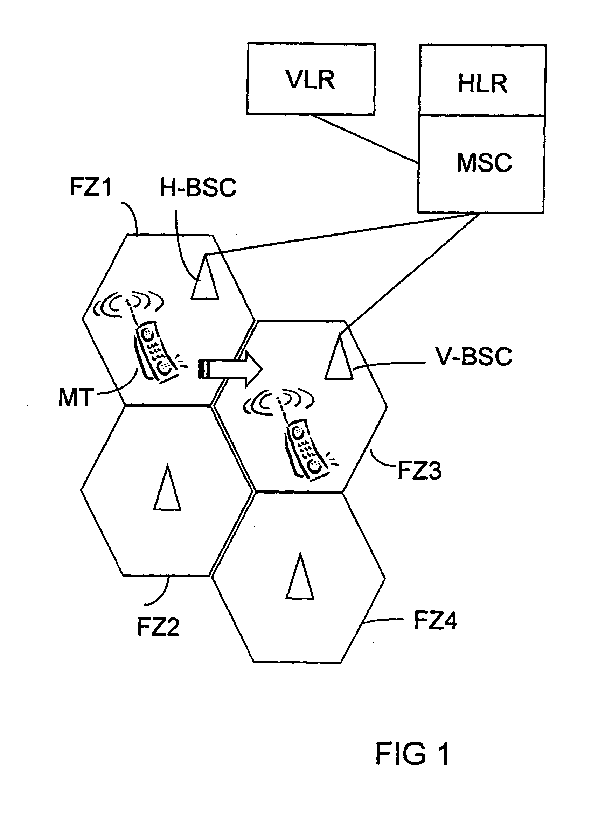

Figur 1 zeigt ein zellular aufgebautes Mobilfunknetz mit einigen Funkzellen FZ1, FZ2, FZ3 und FZ4. In jeder Funkzelle befindet sich Vorrichtungen H-BSC, V-BSC, dargestellt durch Dreiecke, welche den Funkverkehr der betreffenden Zelle steuern. Diese sind verbunden mit einer zentralen Steuerung MSC, welche Zugriff auf Teilnehmerregister HLR und VLR besitzt. Diese Techniken sind dem Fachmann der GSM (Global System for Mobile Communication) Technik bekannt, es sind aber auch andere zelluläre Funknetze wie PCN (Personal Communication Network) oder ähnliches denkbar.

Ein Teilnehmer in diesem Mobilfunknetz wählt nun mittels seines Endgerätes MT (Mobile Terminal) eine andere Teilnehmernummer und bekommt so Verbindung zum Netz in seiner Funkzelle FZ1. Der Aufenthaltsort des zweiten Teilnehmers B-Party und dessen Vermittlungsstelle M-SSP sind für das erfindungsgemäße Verfahren nicht relevant.
Diese Funkzelle ist in der Dienstezentrale mit einer besonderen Eigenschaft verknüpft. Dies kann eine besondere Vergebührung sein, die vom Betreiber als Heimatzone (Homezone) bezeichnet wird, und so wird diese Verbindung über ein gesondertes Gebührenmodell berechnet.
Bewegt sich nun der Teilnehmer, verlässt die Heimatzone und tritt in die benachbarte Funkzelle FZ3 ein, so wird die zentrale Steuerung über diese Positionsveränderung informiert, wie in den beiden folgenden Figuren dargestellt.

Die Positionsübermittlung an die Dienstezentrale während des Telefonats erfolgt beispielsweise mittels zusätzliche *Unstructured Supplementary Service* Data USSD und SIM Toolkit. Hierbei werden in MT verfügbare Ortsinformationen oder/und Ortsänderungen übermittelt. Verfügbare Parameter sind beispielsweise "Location Area Identity" (LAI), "Serving Cell ID" und "Serving Cell Channel".

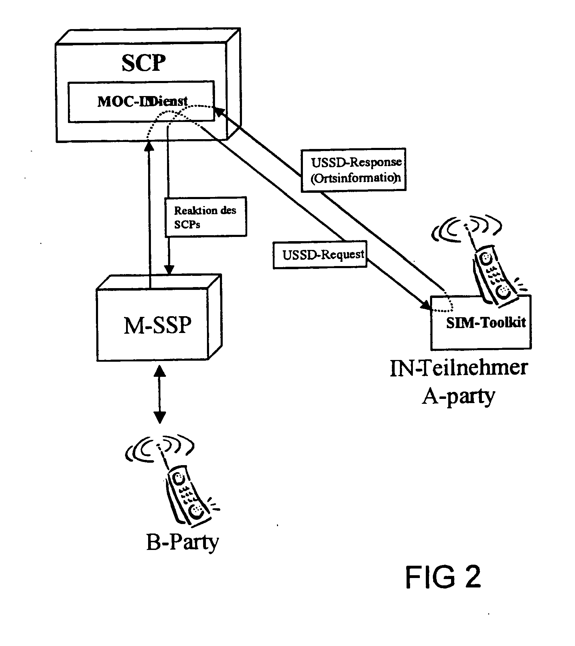

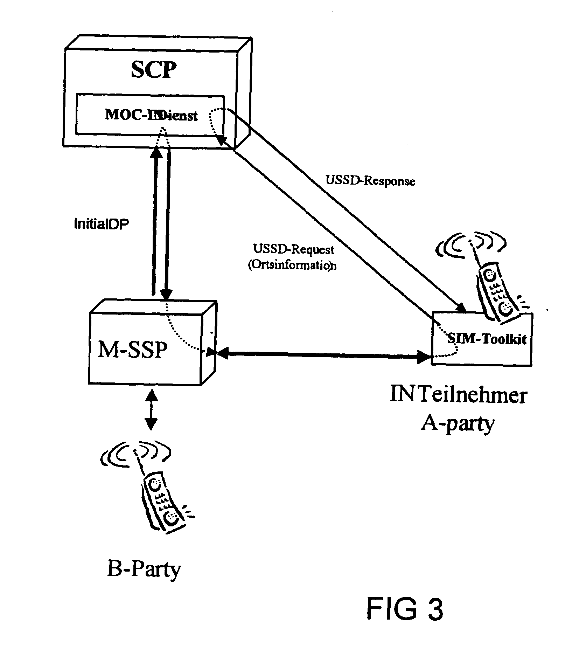

Zwei Lösungsvarianten sind vorstellbar:
- SCP initiiert: Figur 2. Die IN Dienstelogik in der Dienstesteuerungszentrale SCP fragt in dienst-spezifischen Zeitabständen, ob sich der telefonierende Teilnehmer A-Party fortbewegt hat (- so kann der Dienst Anbieter die Signalisierungslast unter Kontrolle halten). Dazu sendet der SCP dem IN Kunden eine Anfrage USSD Request (an die Calling Party Address CgPA bei MOC Diensten, an die Called Party Address CdPA bei MTC Diensten), der das SIM Toolkit der MS auffordert, mit einem USSD Response zu antworten, der Ortsinformationen oder/und Ortsänderungen enthält.
- MS initiiert: Figur 3. Im Fall eines Handovers teilt das MT mit Hilfe des SIM Toolkits der Dienstezentrale SCP via USSD Request mit, dass es sich fortbewegt hat. Selbst innerhalb eines geschlossenen Raumes finden häufig Handover statt, falls eine Nachbarzelle eine bessere Signalstärke aufweist; in diesem Fall hat jedoch kein für den Dienst Anbieter relevanter Ortwechsel stattgefunden. Um zu verhindern, dass hierdurch unnötig viele Ortswechsel dem SCP mitgeteilt werden, kann auch in dem MT eine Zeitsteuerung eingebaut werden: Frühestens nach einem einstellbaren Zeitraum teilt die MS die Ortsinformationen oder/und Ortsänderungen mit, nach Ablauf dieses Zeitraums aber unmittelbar.

## Patentansprüche

1. Verfahren zur Überwachung der Position eines mobilen Kommunikationsendgerätes (MT) bei ortsabhängigen Telekommunikations-Diensten und aktiver Sprachverbindung bei dem
- die Dienstesteuerungszentrale (SCP) im Mobilfunknetz bei Verbindungsaufbau eine erste Information über die Position des mobilen Endgerätes (MT) innerhalb des Mobilfunknetzes von dem Endgerät erhält, und
- die erste Positionsinformation für die Vergebührung von dem ausgewählten ortsabhängigen Telekommunikations-Dienst verwendet wird, und
- die Position des Endgerätes während der aktiven Verbindung nochmals überprüft wird, und
- eine zweite, von der ersten Positionsinformation verschiedene Positionsinformation von dem Telekommunikationsendgerät (MT) ermittelt wird
**dadurch gekennzeichnet, dass**
die Dienstesteuerungszentrale (SCP) über eine von dem Endgerät (MT) selbst festgestellte Positionsänderung des Endgerätes von einer ersten Funkzelle (FZ1) in eine weitere Funkzelle (FZ3) des Mobilfunknetzes während der aktiven Verbindung eine Benachrichtigung (USSD-Response), enthaltend die zweite Positionsinformation, (Ortsinformation) erhält,
wobei
a) die Vergebührung des Telekommunikationsdienstes abhängig von der Positionsinformation des zu vergebührenden Endgerätes ist, und
b) wenn eine Positionsänderung des Endgerätes festgestellt wird,
c) die Vergebührung des Telekommunikationsdienstes angepasst wird.

2. Verfahren nach Patentanspruch 1,
**dadurch gekennzeichnet, dass**
eine Positionsinformation des Endgerätes (MT) durch die Dienstesteuerungszentrale (SCP) von dem Endgerät (MT) abgefragt (USSD-Request) wird,

3. Verfahren nach einem der vorherigen Patentansprüche,
**dadurch gekennzeichnet, dass**
die im Endgerät vorhandene Ortsinformationen durch das im Endgerät vorhandene SIM Toolkit ermittelt wird.

4. Verfahren nach einem der Patentansprüche 1 bis 3,
**dadurch gekennzeichnet, dass**
eine Positionsinformation durch Unstructured Supplementary Service Data (USSD-Response) übertragen wird.

5. Verfahren nach einem der Patentansprüche 1 bis 3,
**dadurch gekennzeichnet, dass**
eine Positionsinformation durch Short Message Service (SMS) übertragen wird.

6. Verfahren nach einem der vorigen Patentansprüche,
**dadurch gekennzeichnet, dass**
erst nach einem im Endgerät einstellbaren Zeitraum eine zweiten Positionsinformation an die Dienstesteuerungszentrale (SCP) übermittelt wird.

## Claims

1. Method for monitoring the position of a mobile communication terminal (MT) in the case of location-dependent telecommunication services and active voice link, wherein
- during call set-up, the service control centre (SCP) in the mobile radio network receives from the terminal first information about the position of the mobile terminal (MT) within the mobile radio network, and
- the first position information is used for charging for the selected location-dependent telecommunication service, and
- the position of the terminal is checked again during the active call, and
- second position information that is different from the first position information is determined by the telecommunication terminal (MT),
**characterised in that**
the service control centre (SCP) receives notification (USSD-Response) of a position change of the terminal, determined by the terminal (MT) itself, from a first radio cell (FZ1) into a further radio cell (FZ3) of the mobile radio network during the active call, which notification contains the second position information (location information),
wherein
a) the telecommunication service charging is dependent on the position information of the terminal to be billed, and
b) when a position change of the terminal is determined,
c) the telecommunication service charging is altered.

2. Method according to claim 1,
**characterised in that**
position information of the terminal (MT) is requested (USSD-Request) from the terminal (MT) by the service control centre (SCP).

3. Method according to one of the preceding claims,
**characterised in that**
the location information present in the terminal is determined by the SIM toolkit present in the terminal.

4. Method according to one of claims 1 to 3,
**characterised in that**
position information is transmitted by means of unstructured supplementary service data (USSD-Response).

5. Method according to one of claims 1 to 3,
**characterised in that**
position information is transmitted by means of the short message service (SMS).

6. Method according to one of the preceding claims,
**characterised in that**
second position information is transmitted to the service control centre (SCP) only after a period of time that is specifiable in the terminal has elapsed.

## Revendications

1. Procédé de surveillance de la position d'un terminal de communication mobile (MT) pour des services de télécommunication dépendant de la localisation et une communication vocale active, dans lequel
- à l'établissement d'une connexion, le point de contrôle de services (SCP) du réseau de télécommunication mobile reçoit par le terminal une première information sur la position du terminal mobile (MT) à l'intérieur du réseau de télécommunication, et
- la première information de position est utilisée pour la taxation du service de télécommunication choisi dépendant de la localisation, et
- la position du terminal est une nouvelle fois vérifiée pendant la connexion active, et
- une seconde information de position, différente de la première information de position, est déterminée par le terminal de télécommunication (MT),
**caractérisé en ce que**
le point de contrôle de service (SCP) reçoit un message (USSD-Response), contenant la seconde information de position (information de localisation), sur un changement de position du terminal constaté par le terminal (MT) lui-même, d'une première cellule radio (FZ1) à une autre cellule radio (FZ3) du réseau de radiocommunication mobile pendant la connexion active,
et dans lequel,
a) la taxation du service de télécommunication est dépendante de l'information de position du terminal à taxer, et
b) lorsqu'un changement de position du terminal est constaté,
c) la taxation du service de télécommunication est adaptée.

2. Procédé selon la revendication 1,
**caractérisé en ce que**
une information de position du terminal (MT) est demandée (USSD-Request) par le point de contrôle de services (SCP) au terminal (MT).

3. Procédé selon l'une des revendications précédentes,
**caractérisé en ce que**
l'information de localisation présente dans le terminal est détectée par le SIM Toolkit présent dans le terminal.

4. Procédé selon l'une des revendications 1 à 3,
**caractérisé en ce que**
une information de position est transmise par Unstructured Supplementary Service Data (USSD-Response).

5. Procédé selon l'une des revendications 1 à 3,
**caractérisé en ce que**
une information de position est transmise par Short Message Service (SMS).

6. Procédé selon l'une des revendications précédentes,
**caractérisé en ce que**
seulement après un laps de temps réglable dans le terminal, une seconde information de position est transmise au point de contrôle de services (SCP).
